# EUROPEAN PATENT APPLICATION

(11) **EP 1 953 500 A1**
(43) Date of publication of application: **06.08.2008**
(21) Application number: 06811702.7
(22) Date of filing: 12.10.2006
(51) Int. Cl.: G01C 21/00, G06F 17/30, G06T 3/00, G06T 11/60, G06T 17/40, G08G 1/0969, G09B 29/00

(54) **INFORMATION DISPLAY DEVICE**

(30) Priority: 01.11.2005 JP 2005318341
(71) Applicant: MATSUSHITA ELECTRIC INDUSTRIAL CO., LTD., Osaka 571-8501 (JP)
(72) Inventor: AKITA, Takashi c/o Matsushita Electric Ind Co.,Ltd, Osaka-shi, Osaka, 540-6207 (JP); KUDOH, Takahiro c/o Matsushita Electric Ind Co, Ltd, Osaka-shi, Osaka, 540-6207 (JP); KINDO, Tsuyoshi c/o Matsushita Electric Co,Ltd, Osaka-shi, Osaka,540-6207 (JP)
(74) Representative: Pautex Schneider, Nicole Véronique
(86) International application number: PCT/JP2006/320414
(87) International publication number: WO 2007/052458

(57) **Abstract**

An object of the present invention is to provide an information display device for presenting, to a user, a correspondence between a position in an actual landscape and a position on a map image. In an information display device (IDA, IDAr), a photographed image acquisition section (1) acquires a photographed image (IC), a map information storage section (4) stores map information (IG) so as to generate a map image (IM), an image display section (7, 8) displays the photographed image (IC) and the map image (IM), an input section (6) designates at least one structure (Rc/Rg) which is displayed in either the photographed image (IC) or the map image (IM) based on an operation performed by the user, and a structure correspondence acquisition section (5) acquires a correspondence (ICb) between the designated structure displayed in either the photographed image (IC) or the map image (IM) and a structure displayed in the other image.

## Description

### TECHNICAL FIELD

The present invention relates to an information display device for instructing a user of geographic information by displaying a correspondence between a photographed image and a map image.

### BACKGROUND ART

Conventionally, as a typical example of a system for instructing a user of geographic information on a current position and a periphery thereof, various types of car navigation devices are widely employed. In a conventional car navigation device, peripheral information on a vehicle position on a map stored, together with a map image, in a recording medium such as an HDD (a hard disc device) or a DVD is displayed on a display, thereby instructing the user of the geographic information on the periphery, for example.

Furthermore, in recent years, in order to allow the user to understand the peripheral information in a more intuitive manner, a retrieval type scene labeling device which instructs, by means of a photographed image, the user of the geographic information on the periphery is proposed (see patent document 1). This retrieval type scene labeling device instructs the user of the peripheral information by displaying the photographed image on which the geographic information, such as a name of a structure, is superimposed.

Therefore, the retrieval type scene labeling device acquires imaging condition information such as a position, angle and focal length of a camera as well as an image size, when picking up the photographed image as a scene image. Thereafter, based on the acquired imaging condition information, a CG image if viewed from a camera whose position, angle and focal length are obtained when picking up an actual landscape, is created in a three-dimensional map space on a computer, thereby establishing correspondences between structures included in the scene image and structures included in the CG image, and assigning the geographic information to the structures included in the scene image.
[Patent document 1] Japanese Laid-Open Patent Publication No. 11-66350

### DISCLOSURE OF THE INVENTION

### PROBLEMS TO BE SOLVED BY THE INVENTION

In the aforementioned car navigation system, it is very desirable that the user can easily recognize the correspondences between the structures included in the actual landscape and the structures displayed in the map. Specifically, a driver of a vehicle compares visually recognizable information acquired from an actual landscape ahead of the driver with relative position information, on the structures such as a road or a building, acquired from the map image, so as to understand the correspondences between the structures included in the actual landscape and the structures included in the map, thereby allowing the driver to travel to a predetermined destination more easily.

However, in a car navigation system integrated with the retrieval type scene labeling device, it is difficult for the user to correctly recognize a correspondence between an arbitrary position on the two-dimensional map image and an arbitrary object included in the actual landscape represented by athree-dimensional image. Furthermore, considering that the driver and his or her passenger are in the vehicle currently being driven, it is more difficult for them to recognize the aforementioned correspondence if the map image and the actual landscape always change in accordance with a movement of the vehicle.

In view of a problem mentioned above, an object of the present invention is to provide an information display device for presenting, to the user, a correspondence between a position in an actual landscape and a position on the map image.

### SOLUTION TO THE PROBLEMS

To achieve the above object, the present invention is directed to an information display device comprising: photographed image acquisition means for acquiring a photographed image; map information storage means for storing map information; means for generating a map image based on the map information; image display means for displaying the photographed image and the map image; input means for designating, based on an operation performed by a user, at least one structure displayed in either the photographed image or the map image; and structure correspondence acquisition means for acquiring a correspondence between the at least one structure displayed in the photographed image and at least one structure displayed in the map image, or acquiring a correspondence between the at least one structure displayed in the map image and at least one structure displayed in the photographed image, wherein the image display means highlights, when the at least one structure displayed in the photographed image is designated, the at least one structure, among structures displayed in the map image, corresponding to the at least one structure having been designated, or highlights, when the at least one structure displayed in the map image is designated, the at least one structure, among structures displayed in the photographed image, corresponding to the at least one structure having been designated.

### EFFECT OF THE INVENTION

In the information display device according to the present invention, when the user designates a structure included in either the photographed image or the map image, a corresponding structure included in the other image is highlighted. As a result, the user can easily understand a correspondence between a structure designated in the photographed image obtained by picking up the actual landscape and a structure, included in the map image, corresponding to the designated structure, or a correspondence between a structure designated in the map image and a structure included in the photographed image, corresponding to the designated structure, that is, a correspondence between a position in the actual landscape and a position on the map corresponding thereto.

### BRIEF DESCRIPTION OF THE DRAWINGS

[FIG. 1] FIG. 1 is a block diagram illustrating a configuration of an information display device according to the first embodiment of the present invention.
[FIG. 2] FIG. 2 is a diagram describing examples of a map image and a photographed image displayed on an image display section included in the information display device shown in FIG. 1.
[FIG. 3] FIG. 3 is a diagram describing a state where when a structure displayed in the photographed image is designated, a corresponding structure on a map image IM is highlighted, in the information display device shown in FIG. 2.
[FIG. 4] FIG. 4 is a flowchart illustrating an operation of highlighting, in response to a designation of a structure displayed in the photographed image, a corresponding structure on the map image IM, in the information display device shown in FIG. 1.
[FIG. 5] FIG. 5 is a diagram describing an operation of a first structure specifying routing shown in FIG. 4.
[FIG. 6] FIG. 6 is a flowchart illustrating a structure highlighting operation according to a first variant of the information display device shown in FIG. 1.
[FIG. 7] FIG. 7 is a flowchart illustrating the structure highlighting operation according to a second variant of the information display device shown in FIG. 1.
[FIG. 8] FIG. 8 is a diagram illustrating examples of the map image and the photographed image displayed on the image display section, in a third variant of the information display device shown in FIG. 1.
[FIG. 9] FIG. 9 is a diagram illustrating a state where a structure displayed in the map image is designated, a corresponding structure on the photographed image is highlighted, in the information display device according to a second embodiment of the present invention.
[FIG. 10] FIG. 10 is a flowchart illustrating the structure highlighting display operation in the information display device according to the second embodiment of the present invention.
[FIG. 11] FIG. 11 is a diagram describing a state where a structure displayed in the map image is designated, a corresponding structure on the photographed image is highlighted, in a first variant of the information display device according to the second embodiment of the present invention.
[FIG. 12] FIG. 12 is a flowchart illustrating the structure highlighting operation in the information display device according to a third embodiment of the present invention.
[FIG. 13] FIG. 13 is a flowchart illustrating the structure highlighting operation in the information display device according to a fourth embodiment of the present invention.

### DESCRIPTION OF THE REFERENCE CHARACTERS

IDA, IDAr information display device
1 photographed image acquisition section
2 position information acquisition section
3 camera attribute information acquisition section
4 map information storage section
5 structure correspondence acquisition section
6 input section
7 image display section
IC photographed image
IM map image
U user

### BEST MODE FOR CARRYING OUT THE INVENTION

Hereinafter, referring to the drawings, an information display device according to embodiments of the present invention will be described. Note that in each drawing, elements which do not particularly pertain to the present invention are omitted taking visibility into consideration. Prior to describing the information display device in detail, a basic concept of the present invention will be described. The present invention presents, to a user, a correspondence between an arbitrary portion displayed in a photographed image picked up by a camera and an arbitrary portion displayed in a previously acquired map image, thereby assisting the user in easily understanding a correspondence between an actual landscape and a map. In the case where the present invention is applied as a car navigation system, an arbitrary portion to be designated may be a structure such as a building or a road or may be a position thereof.

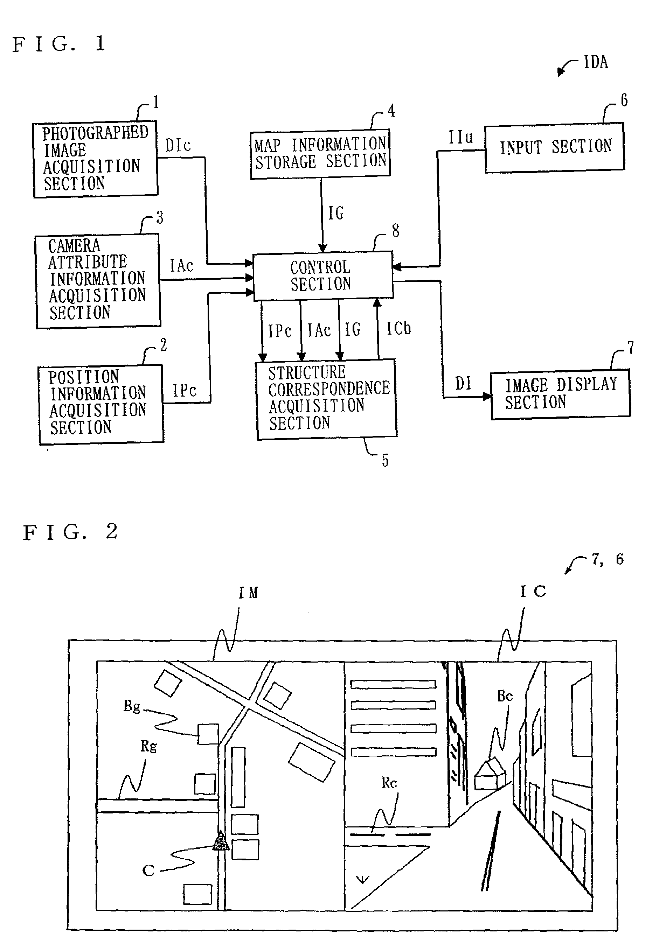

(first embodiment)
As shown in FIG. 1, an information display device IDA according to a first embodiment of the present invention comprises a photographed image acquisition section 1, a position information acquisition section 2, a camera attribute information acquisition section 3, a map information storage section 4, a structure correspondence acquisition section 5, an input section 6, an image display section 7, and a control section 8. The photographed image acquisition section 1 includes a camera for picking up an actual landscape so as to generate photographed image data DIc . An image to be picked up may be a still image or a moving image. In the present embodiment, the camera is mounted so as to image an area ahead of a vehicle. An actual landscape image picked up by the camera is outputted as the photographed image data DIc. Note that the present invention conveniently assumes that a photographed landscape image represented by the photographed image data DIc is referred to as a photographed image IC.

The position information acquisition section 2 maybe a GPS receiver, for example, for acquiring a camera position obtained when the photographed image acquisition section 1 acquires a photographed image. More specifically, the camera position indicates camera position information IPc representing an actual position of the camera mounted on a vehicle being moved or stopped on a road or the like. Note that position information acquired by the GPS receiver may be corrected based on a positional relationship between the GPS receiver and the camera, so as to be used as the camera position information IPc.

The camera attribute information acquisition section 3 acquires camera attribute information IAc, which is a parameter for determining an imaging direction and an imaging area, both of which are used when the photographed image acquisition section 1 acquires a photographed image. The camera attribute information IAc includes camera angles (a horizontal angle and an elevation angle), a focal length, and an image size. If the imaging direction and the imaging area can be determined, other parameters such as an angle of view or the like maybe used to obtain the camera attribute information IAc. Alternatively, a value set in the camera may be acquired as the camera attribute information IAc, or the camera attribute information IAc may be acquired by a three-dimensional compass mounted in the camera.

The map information storage section 4 stores, in a medium such as an HDD or a DVD, for example, geographic information IG representing positions, names or the like of previously-prepared roads or facilities. The geographic information IG also includes three-dimensional map data DMt containing information on a height of a structure.

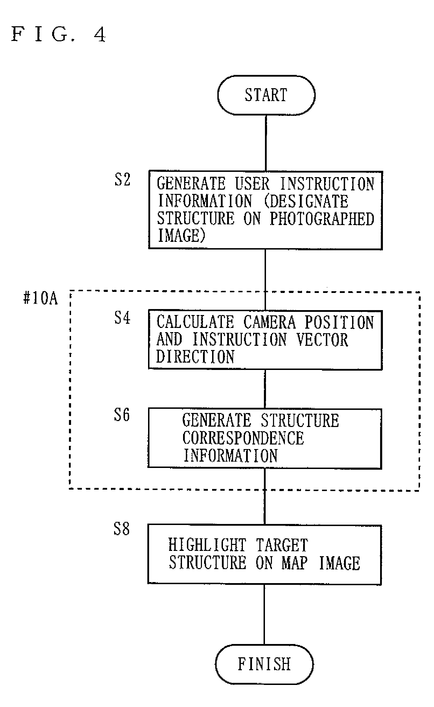

The structure correspondence acquisition section 5 establishes a correspondence between a structure included in the photographed image and a structure included in the map image, based on the camera position information IPc, the camera attribute information IAc, the geographic information IG and user instruction information IIu, all of which are inputted via the control section 8, thereby generating structure correspondence information ICb. Note that, referring to FIG. 4, the structure correspondence acquisition section 5 will be described later.

The input section 6 may be a touch panel or a remote control, for example, for receiving an operation performed by the user. The input section 6 further generates the user instruction information IIu representing an instruction inputted by the user based on the received operation performed by the user.

The image display section 7 may be a display, for example, for displaying a map image IM and the photographed image IC based on image data DI supplied via the control section 8. The map image IM displayed on the image display section 7 may be a 2D (two-dimensional) map or a 3D (three-dimensional) map. The input section 6 acts as a touch panel provided on a display screen of the image display section 7.

As shown in FIG. 2, the display screen of the image display section 7 is preferably divided into two portions, and the map image IM and the photographed image IC are displayed on the two portions, respectively. As described above, the photographed image IC shows an actual landscape, ahead in a traveling direction, which is picked up by the photographed image acquisition section 1 included in the information display device IDA mounted on the vehicle driven by the user. A T-intersection with a road Rc extending leftward with respect to the traveling direction is shown at the lower-left corner of the photographed image IC.

In the map image IM, a code C indicates an own vehicle on which the information display device IDA is mounted, and a code Rg indicates a road corresponding to the road Rc included in the photographed image IC. As is clear from FIG. 2, although structures included in the photographed image IC are concealed behind a building ahead or the like, these concealed structures are displayed in the map image IM.

Referring back to FIG. 1, the control section 8 controls an entire operation of the information display device IDA based on the photographed image data DIc, the camera position information IPc, the camera attribute information IAc, the geographic information IG, the structure correspondence information ICb and the user instruction information IIu, all of which are inputted from the photographed image acquisition section 1, the position information acquisition section 2, the camera attribute information acquisition section 3, the map information storage section 4, the structure correspondence acquisition section 5 and the input section 6, respectively. The control section 8 may be a CPU, for example.

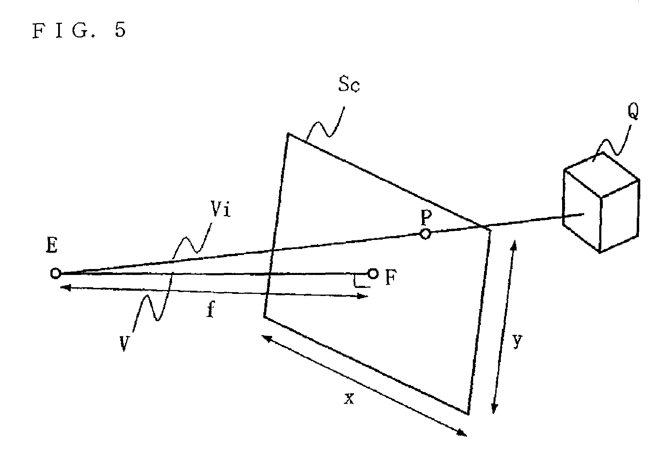

Next, referring to FIG. 4 and FIG. 5, described will be an operation performed when the information display device IDA highlights a structure, on the map image IM, corresponding to that designated by the user. Note that this operation starts when the user operates the input section 6 so as to designate, among structures included in the photographed image IC displayed on the image display section 7, a structure he or she wishes to recognize its position on the map image IM. Then, through a process shown in FIG. 4, an image of a corresponding structure included in the map image IM is displayed to the user, for example, in a blinking manner.

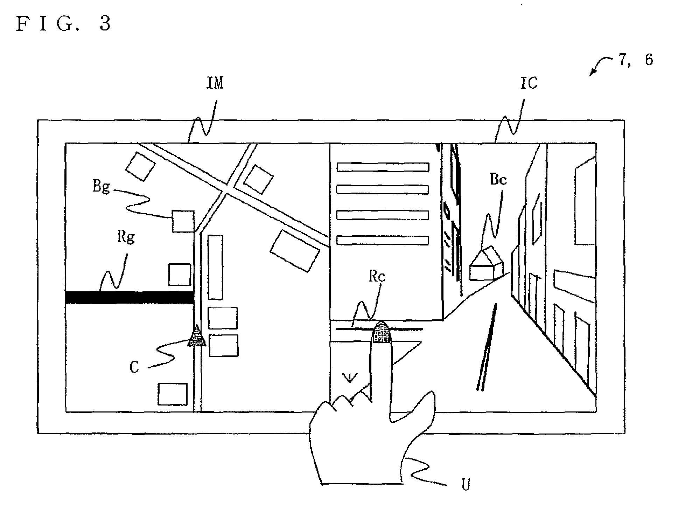

As shown in FIG. 3, in the present embodiment, a portion of the road Rc included in the photographed image IC is touched, thereby selecting a corresponding portion included in the map image IM as an object to be displayed. In accordance with the selection, a road Rg, included in the map image IM, corresponding to the road Rc is displayed in a blinking manner, for example. Note that in FIG. 3, for the sake of the clarity of the drawing, the road Rg is indicated in solid black. More specifically, in response to an operation performed by the user touching an image of the road Rc included in the photographed image IC, the structure correspondence acquisition section 5 specifies a structure (the road Rc) so as to highlight the road Rg included in the map image IM. Thus, the user can easily recognize a correspondence between the specified structure included in the photographic image IC and a structure included in the map image IM (which one of structures on the map the designated structure included in the photographed image corresponds to).

Referring to FIG. 4, a corresponding structure highlighting process performed by the information display device IDA will be described.
As described above, the highlighting process starts when a user U touches an arbitrary portion included in the photographed image IC, thereby selecting the arbitrary portion. In the present embodiment, a touch panel is used as the input section 6. However, if the user can specify an arbitrary position on the photographed image IC, the input section 6 may be any means such as a remote control or the like.

In step S2, in response to an operation performed by the user touching a specific portion included in the photographed image IC through the touch panel (the input section 6), the user instruction information IIu is outputted from the input section 6 to the control section 8. Then, the process proceeds to step S4.

In step S4, based on the user instruction information IIu, the camera attribute information IAc (the camera angles, focal length and image size) and the camera position information IPc, all of which are inputted from the control section 8, the structure correspondence acquisition section 5 calculates a direction toward a point designated by the user from a camera position (hereinafter, referred to as an "instruction direction vector") in a three-dimensional map space obtained by the geographic information IG. Then, the process proceeds to step S6.

In step S6, the structure correspondence acquisition section 5 specifies a structure that the user has designated on the photographed image IC, thereby generating the structure correspondence information ICb. Note that aforementioned steps S4 and S6 form a first structure specifying routing #10A. Then, the process proceeds to step S8.

In step S8, based on the structure correspondence information ICb, the control section 8 generates the image data DI so as to highlight a portion indicating the specified structure on the map image IM. Based on the image data DI, the image display section 7 blinks the specified portion, on the map image IM, corresponding to the structure that the user has designated on the photographed image IC. Then, the process is finished. Other than blinking, any method may be used for highlighting the portion if a method is to optically draw the attention of the user, such as changing its displayed color, brightness and the like, highlighting its contour, displaying a name or the like superimposed on the potion of a specified structure, inverting the colors, applying colors to the portion, and increasing and decreasing illumination. In other words, a method of highlighting the portion is not limited to examples mentioned above. Any other means may also be used if the user can recognize an object corresponding to a structure he or she has designated on the photographed image IC. Any method of drawing the attention of the user may be used such as inverting the colors, applying colors to the object, and increasing and decreasing illumination.

Referring to FIG. 5, a structure specifying method realized by the aforementioned first structure specifying routing #10A (steps S4 and S6) will be described in detail. In FIG. 5, a code Q indicates a real structure designated by the user (a road in the present embodiment), a code Sc indicates a camera screen of the photographed image acquisition section 1, and a code E indicates a viewpoint that is a camera position. In the three-dimensional map space as shown in FIG. 5, a point F apart from the viewpoint E in a camera angle direction by a focal length f is obtained, and a plane having a horizontal length x and a vertical length y, both of the respective lengths are the same as those of the image size (the camera screen Sc) is set so as to be perpendicular to a reference vector V obtained by connecting the viewpoint E to the point F.

Thereafter, when the user designates a point P on the camera screen Sc, for example, a structure pointed to by an instruction direction vector Vi obtained by connecting the viewpoint E to the point P is determined in the three-dimensional map space, thereby specifying a structure Q designated by the user.

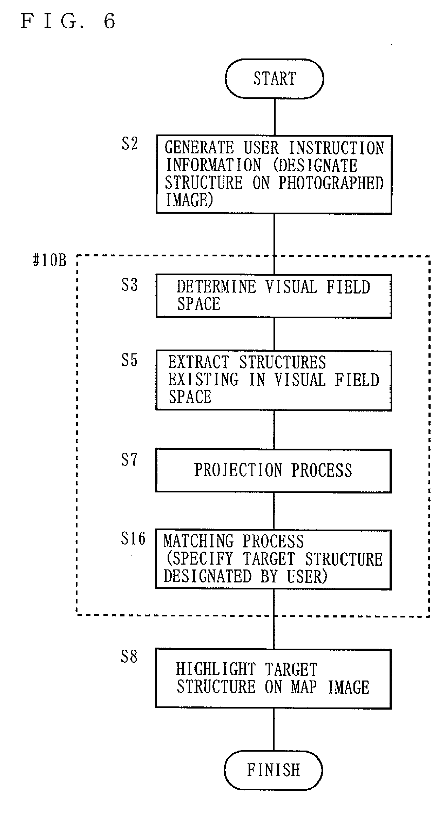

<first variant>
Next, referring to FIG. 6, a first variant of the information display device IDA according to the first embodiment will be described. The information display device IDA of the first variant is the same as that of the first embodiment except for the structure specifying method. In a flowchart shown in FIG. 6, steps S4 and S6 in a flowchart shown in FIG. 4 are replaced with steps S3, S5, S7 and S16. That is, steps S3, S5, S7 and S16 form a second structure specifying routing #10B.

Specifically, the second structure specifying routing #10B is executed as described below. That is, in step S3, the three-dimensional space delimited by four half-lines extending from the viewpoint E, as shown in FIG. 5, to respective four corners of the camera screen is set as a visual field space. Theoretically, the visual field space can be set at an infinite distance from the viewpoint. However, the visual field space may be maintained at an appropriate distance from the viewpoint. Then, the process proceeds to step S5.

In step S5, structures existing in the visual field space are determined in the three-dimensional map space. Then, the process proceeds to step S7.

In step S7, a process of projecting the determined structures onto the camera screen Sc shown in FIG. 5 is executed. When executing such a projection process, a hidden-surface process is executed taking into consideration structures which may be overlapped with each other when viewed from the viewpoint E, thereby differentiating between portions visible from the viewpoint E and invisible portions obstructed by other structures. As the hidden-surface process, a well-known method such as a Z buffer method, a scan line method, a ray tracing method and the like may be used. Note that the projection process may be executed only in an area in the vicinity of a position designated by the user, instead of executing the process in the entirety of the visual field space. Then, the process proceeds to step S16.

In step S16, executed is a matching process of establishing a correspondence between the designated structure displayed in the photographed image IC and a structure included in an image in which the structures existing in the visual field space are projected onto the camera screen Sc (hereinafter, referred to as a "CG image") . In the matching process, an area dividing process is executed so as to divide each of the photographed image IC and the CG image into areas by structures, thereby establishing a correspondence between an area included in the photographed image IC and an area included in the CG image by means of a template matching method, for example. Note that a well-known image processing technique, such as edge detection and a labeling process, can be used for dividing the photographed image IC into areas.

Since the CG image is created based on the geographic information IG including the three-dimensional map data stored in the map information storage section 4, a structure corresponding to each of the areas included in the CG image is already known. Therefore, by establishing a correspondence the designated structure included in the photographed image IC and a structure included in the CG image by means of the matching process, the designated structure included in the photographed image IC can be specified.

That is, by determining an area including a position that the user has designated on the photographed image IC, thereby making it possible to specify a structure designated by the user. Thus, the structure correspondence information ICb is generated. The above variant illustrates an example where the area dividing process is executed on both the photographed image IC and the CG image. However, in order to reduce a processing load, results of area divisions performed on the CG image may directly apply to the photographed image IC.

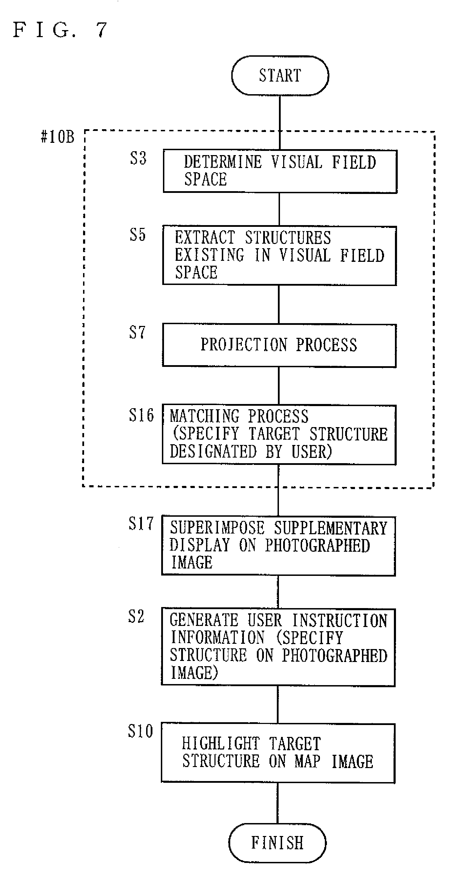

<second variant>
Referring to FIG. 7, a second variant of the information display device according to the first embodiment of the present invention will be described. In a flowchart shown in FIG. 7, step S2 of FIG. 6 is moved immediately before step S10, and step S8 of FIG. 6 is deleted, and step S17 of superimposing a supplementary display on the photographed image is newly added between step S2 and the second structure specifying routing #10B.

In the present variant, the second structure specifying routing #10B is executed without prompting the user to designate an object on the photographed image IC (step S2). At this point, structures that user can designate on the photographed image IC are specified. Then, the process proceeds to step S17.

In step S17, a supplementary display is superimposed on the specified structures such as highlighting its contours in the photographed image IC, thereby indicating that the specified structures can be designated. Therefore, the user can easily perform an operation of designating a structure on the photographed image IC. In other words, at the time when the user designates a structure, areas in which structures exist are already specified. Thus, it is possible to use not only the structure specifyingmethod, mentioned in the above embodiment, of prompting the user to designate a point on the screen, but also another structure specifying method of assigning a number to each of the areas so as to prompt the user to designate the number or to select an area by mean of a remote control, for example. Then, the process proceeds to step S2.

In step S2, when the user designates a structure on the photographed image IC (S13), a structure, on the map image MC, corresponding to the designated structure is already determined. Therefore, with no need to execute a process of generating the structure correspondence information in step S8, a corresponding structure on the map image IM is highlighted in step S10.

Furthermore, if the photographed image IC contains structures in which portions or entireties thereof are concealed by other structures when the user designates a structure included in the photographed image IC, a supplementary display indicating that such structures actually exist in the photographed image IC may be superimposed thereon. Also in this case, before the user designates a structure, the same process as the second structure specifying routing #10B (steps S3 to S16) is executed. In the hidden-surface process of the projection process, however, if there are structures in which portions or entireties thereof are determined to be concealed behind other structures, the structures are displayed in a supplementary manner such as in a translucent manner, for example, thereby indicating that such structures exist in the photographed image IC.

For example, a button for designating each of the structures is set so as to correspond to the supplementary display, thereby allowing the user to select each of the structures. Therefore, the user can easily select even invisible structures concealed by other structures.

Furthermore, provided may be obstacle detection means for detecting a structure which is not stored in the three-dimensional map such as a vehicle ahead. In this case, a direction, distance and shape of an obstacle are detected by image recognition or other well-known obstacle detection means, and the detected obstacle is projected onto the camera screen, thereby determining an area of the obstacle on the photographed image IC. Note that an obstacle may be detected by means of an image acquired by the photographed image IC acquisition means 1. In this case, it is unnecessary to execute a process of projecting the detected obstacle onto the camera screen.

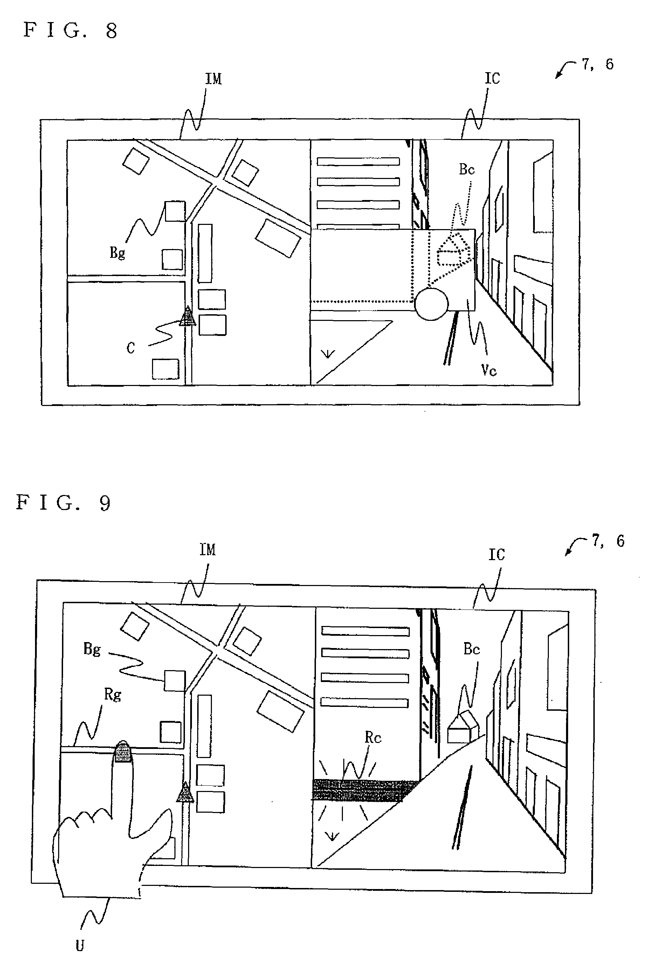

<third variant>
Next, referring to FIG. 8 and FIG. 9, a third variant of the information display device according to the first embodiment will be described. According to the present variant, in the photographed image IC displayed on the image display section 7, structures which are concealed by an obstacle and hence cannot be visually recognized are displayed in a supplementary manner such as in a translucent manner, for example, so as to indicate that such structures actually exist in the photographed image IC, thereby allowing the user to easily recognize the invisible structures. Thus, means for detecting an obstacle is provided.

In FIG. 8, the map image IM and the photographed image IC are displayed, in a similar manner to FIG. 2, on the screen of the image display section 7. However, in the photographed image IC, a building Bc, a structure ahead and a road on which the own vehicle is traveling are not displayable since a vehicle Vc traveling on the road Rc obstructs these three objects, which are usually visually recognizable. Therefore, as shown by dotted lines, the building Bc, the structure ahead and the road on which the own vehicle is traveling are displayed in a translucent manner within the vehicle Vc. As a result, the user can recognize the presences of the structures obstructed by the vehicle Vc.

Then, the user touches a translucent display of the building Bc, for example, thereby causing a building Bg on the map image IM to be highlighted. As described above, the user can easily select, on the photographed image IC, even a structure concealed behind an obstacle which is not stored in the map such as a vehicle ahead or the like.

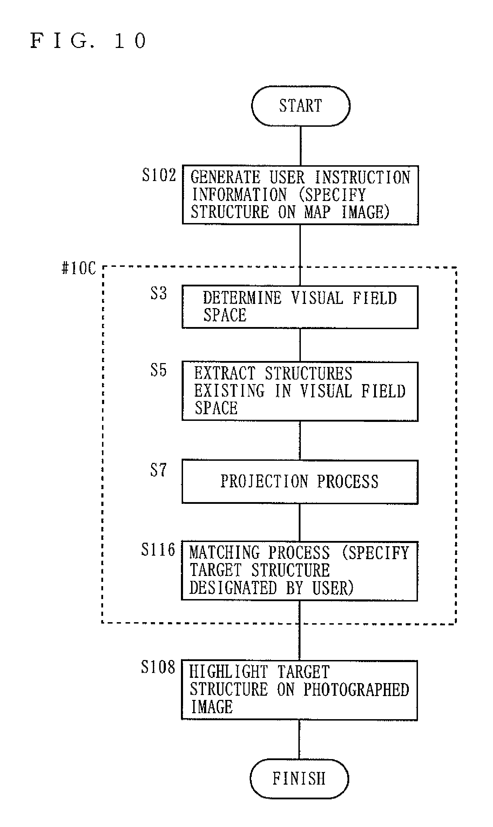

(second embodiment)
Hereinafter, referring to FIG. 9 and FIG. 10, the information display device according to a second embodiment of the present invention will be described. In the information display device IDA according to the first embodiment, in response to a designation of a structure included in the photographed image IC displayed on the image display section 7, a corresponding structure included in the map image IM is highlighted. However, in an information display device IDAr (not shown) according to the present embodiment, in response to the user designating a structure included in the map image IM, a corresponding structure included in the photographed image IC is highlighted. Note that a configuration of the information display device IDAr is basically the same as that of the information display device IDA.

In FIG. 9, the user, that is, a vehicle on which the information display device IDAr is mounted is basically in the same state as that shown in FIG. 2 (and FIG. 3). Therefore, the map image IM and the photographed image IC, both displayed on the image display section 7, are also in the same state as those shown in FIG. 2. Note that in the present embodiment, as shown in FIG. 9, the user touches a portion of the road Rg included in the map image IM, thereby selecting a corresponding portion included in the photographed image IC as an object to be displayed. Thereafter, in accordance with the selection, the road Rc, included in the photographed image IC, corresponding to the road Rg is displayed in a blinking manner, for example. Note that in FIG. 9, for the sake of the clarity of the drawings, the road Rc is highlighted with three diagonal lines attached respectively above and below the road Rc.

Specifically, in response to an operation performed by the user touching an image of the road Rg included in the map image IM, the structure correspondence acquisition section 5 specifies a structure (the road Rg) so as to highlight the road Rc included in the photographed image IC. Thus, the user can easily recognize a correspondence between the specified structure included in the map image IM and a structure included in the photographed image IC (which one of structures included in the photographed image IC the designated structure on the map corresponds to).

Referring to FIG. 10, the corresponding structure highlighting process performed by the information display device IDAr will be described. In a flowchart shown in FIG. 10, step S2, the second structure specifying routing #10B and step S8 of FIG. 6 are replaced with steps S102, a third structure specifying routing #10C and step S108, respectively. Note that the third structure specifying routing #10C is the same as the second structure specifying routing #10B shown in FIG. 6 except that step S16 is replaced with step S116.

Specifically, in step S102, in response to an operation performed by the user touching a specific portion included in the map image IM through the touch panel (the input section 6), the user instruction information IIu is outputted from the input section 6 to the control section 8. Then, the process proceeds to the third structure specifying routing #10C.

In the third structure specifying routing #10C, after going through steps S3, S5 and S7 mentioned above, the process basically same as that in step S16 is executed in step S116. However, in step S116, an area correspondence is established between two images based on a structure that the user has designated on the map image IM, thereby specifying a position, on the photographed image IC, corresponding to the structure that the user has designated on the map image IM.

The structure correspondence acquisition section 5 specifies the structure that the user has designated on the map image IM, thereby generating the structure correspondence information ICb. Then, the process proceeds to step S108.

In step S108, the control section 8 generates the image data DI so as to highlight a portion indicating a specified structure on the photographed image IC based on the structure correspondence information ICb. Based on the image data DI, the image display section 7 blinks the specified portion, on the photographed image IC, corresponding to the structure that the user has designated on the map image IM. Then, the process is finished.

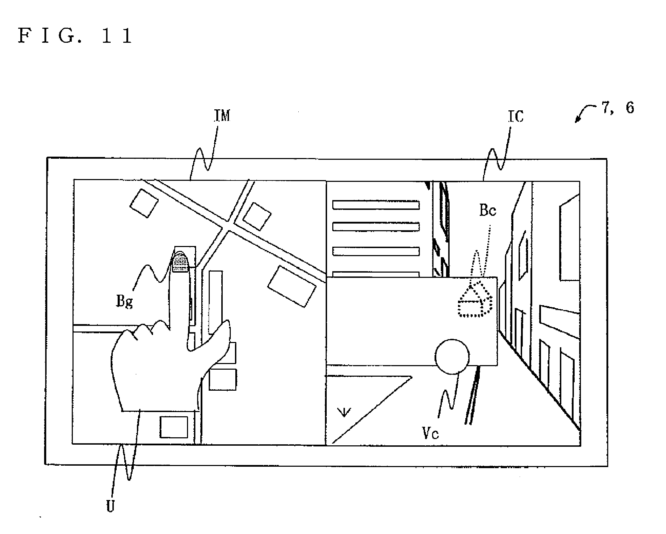

<first variant>
Referring to FIG. 11, a first variant of the information display device IDAr according to the second embodiment will be described. In the present variant, as shown in FIG. 11, when a portion or an entirety of a structure that the user has designated on the map image IM is concealed by other structures in the photographed image IC, a supplementary display (a translucent display, for example) is superimposed on the photographed image IC, so as to indicate that the concealed structure exists in the photographed image IC. Specifically, in FIG. 11, the user, that is, the vehicle on which the information display device IDAr is mounted is basically in the same state as that shown in FIG. 9. In other words, in the photographed image IC displayed on the image display section 7, the building Bc, the structure ahead and the road on which the own vehicle is traveling are not displayable, in a similar manner to FIG. 2, since the vehicle Vc traveling on the road Rc obstructs these three objects, which are usually visually recognizable. Therefore, as shown by dotted lines, the building Bc is displayed in a translucent manner within the vehicle Vc.

As described above, in the case where the information display device IDAr includes the obstacle detection means for detecting a structure which is not stored in the three-dimensional map, such as a vehicle ahead, even if a structure that the user has designated on the map image IM is concealed behind an obstacle in the photographed image IC, such a concealed structure is displayed in a translucent manner, for example, thereby making it possible to indicate that the structure actually exists in the photographed image IC.

More specifically, when the user touches a portion of the building Bg included in the map image IM, the structure correspondence acquisition section 5 specifies a position, on the photographed image IC, corresponding to the portion of the building Bg included in the map image IM. Furthermore, the structure correspondence acquisition section 5 detects that the position (the building Bc), on the photographed image IC, corresponding to the building Bg included in the map image IM is within an area of an obstacle (a vehicle ahead B), on the photographed image IC, detected by the obstacle detection means. Thereafter, the building Bg is translucently displayed in the photographed image IC.

Thus, the user can even recognize a position, on the photographed image IC, of an invisible structure concealed by an obstacle such as a vehicle ahead and the like. Note that whether or not a structure that user designates on the map image IM is concealed by other structures in the photographed image IC can be determined through the projection process (the hidden-surface process) in step S7 of the flowchart shown in FIG. 10. Thus, the user can even recognize a position, on the photographed image IC, of an invisible structure concealed by other structures.

The above variant illustrates an example where a structure which is not stored in the three-dimensional map such as a vehicle ahead conceals other structures. Similarly, also in the case where a structure stored in the three-dimensional map conceals the other structures, the concealed structures are translucently displayed, thereby allowing the user to recognize positions, on the photographed image IC, of the concealed structures.

Furthermore, when the user designates a structure included in the map image IM, a supplemental display for indicating structures which can be selected by the user may be superimposed on the map image IM. In this case, similarly to the third structure specifying routing #10C, before the user designates a structure, structures existing in the visual field space of the camera are determined in the three-dimensional map space. Thereafter, the projection process and the matching process are executed, thereby establishing a correspondence between each of the structures included in the photographed image IC and each of the structures included in the map image IM.

Thus, structures which the user can designate on the map image IM are specified. Then, contours of the specified structures are highlighted on the map image IM, for example, so as to indicate that the specified structures can be designated, thereby allowing the user to easily perform an operation of designating a structure on the map image IM.

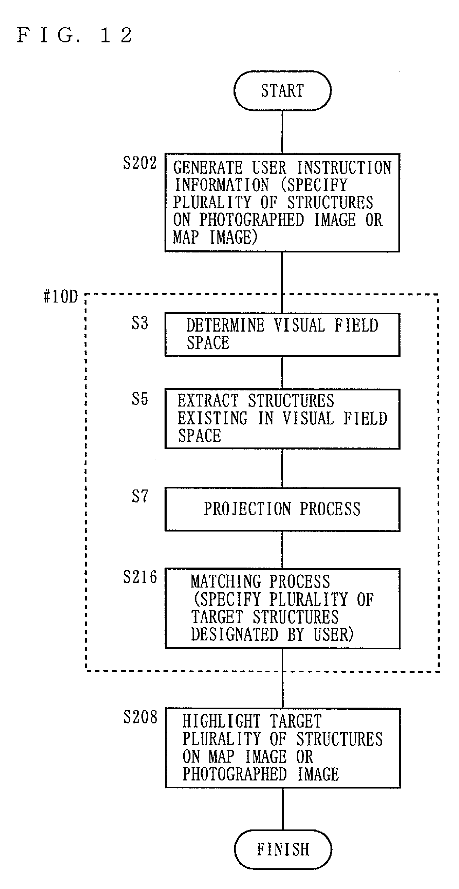

(third embodiment)
Next, referring to FIG. 12, an information display device IDArr (not shown) according to a third embodiment of the present invention will be described. In the aforementioned embodiments and variants thereof, when the user designates a structure included in either the photographed image IC or the map image IM, a corresponding structure included in the other image is highlighted, thereby allowing the user to easily understand a correspondence between a structure designated in the photographed image obtained by picking up the actual landscape and a structure, included in the map image, corresponding to the designated structure, or a correspondence between a structure designated in the map image and a structure included in the photographed image, corresponding to the designated structure. Here, as means effective for both cases where the user designates a structure included in the photographed image IC and where the user designates a structure included in the map image IM, a structure highlighting method may be changed depending on the order of the structures designated by the user.

Referring to FIG. 12, an operation of the information display device IDArr according to the present embodiment will be described. A flowchart shown in FIG. 12 is the same as the aforementioned flowchart shown in FIG. 10 except that step S102, the third structure specifying routing #10C and step S108 are replaced with step S202, a fourth structure specifying routing #10D and step S208, respectively. Also, the fourth structure specifying routing #10D is the same as the third structure specifying routing #10C except that step S116 is replaced with step S216.

Firstly, in step S202, in response to an operation performed by the user touching a specific portion included in the photographed image IC through the touch panel (the input section 6), the user instruction information IIu is outputted to the control section 8. Specifically, when the user selects a plurality of structures he or she wishes to recognize positions thereof on the map image IM from among structures displayed in the photographed image IC, or when the user selects a plurality of structures he or she wishes to recognize positions thereof on the photographed image IC from among structures displayed in the map image IM, the user instruction information IIu is generated accordingly. Then, the process proceeds to the fourth structure specifying routing #10D.

In the fourth structure specifying routing #10D, after going through steps S3, S5 and S7 mentioned above, a correspondence between each of the selected structures included in either the photographed image IC or the map image IM and a structure included in the other image is established in step S216. Then, the plurality of structures, on the photographed image IC, designated by the user are specified on the map image IM, thereby generating the structure correspondence information ICb. Or the plurality of structures, on the map image IM, designated by the user are specified on the photographed image IC, thereby generating the structure correspondence information ICb. Note that the structure correspondence information ICb includes information on the order of the plurality of structures designated by the user. Then, the process proceeds to step S208.

In step S208, in the map image IM or the photographed image IC displayed on the image display section 7, the plurality of structures designated by the user are sequentially highlighted in a designated order. As an exemplary highlighting method, the designated structures are sequentially displayed while changing colors thereof depending on the order designated by the user, such as displaying a firstly designated structure in red, a secondly designated structure in yellow, and a thirdly designated structure in blue. As such, the structure highlighting method is changed depending on the order of the structures designated by the user, thereby allowing the user to easily understand, even when the user designates a plurality of structures, a correspondence between each of the designated structures included in the photographed image IC and a structure included in the map image IM, or a correspondence between each of the designated structures included in the map image IM and a structure included in the photographed image IC.

Note that the highlighting method is not limited to a method of establishing correspondences by changing colors of the structures. Other than colors, a highlighted size or shape may be changed. Furthermore, character information or the like may be used. Or any two structures, corresponding to each other, respectively included in the photographed image IC and the map image IM may be displayed so as to be connected to each other by a line or the like.

Alternatively, the structure highlighting method may be changed depending on attributes of structures other then the order of the structures designated by the user. Also in this case, particularly when the user designates a plurality of structures, it becomes easier for the user to understand the correspondence between each of the designated structures included in the photographed image IC and a structure included in the map image IM, or the correspondence between each of the designated structures included in the map image IM and a structure included in the photographed image IC . Note that when a plurality of structures are designated, it is effective to execute a process of, for example, not highlighting any more structures if the number of highlighted structures exceeds a fixed number, or of finishing the highlighting process in accordance with an operation inputted by the user, in order to prevent visibility from deteriorating due to an increased number of structures highlighted on the screen.

Furthermore, a map display area may be set such that structures existing in the visual field space of the photographed image IC are displayed in the map image IM. This becomes possible to highlight, when the user designates a structure on the photographed image IC, a corresponding structure on a map which is set to have an appropriate scale and display area, even if the corresponding structure is not displayed in the map image IM since the visual field space of the camera is displaced from the map display area, or the corresponding structure cannot be displayed in the map image IM in an appropriate size since the map display area is set too large, for example.

Alternatively, the map may be set to have an appropriate scale and diaply area when the user is attempted to designate a structure on the map image IM (when pressing down a "structure designating" button, for example). Thus, it becomes easier for the user to designate, on the map screen, a structure existing in the visual field space of the camera, and the visibility is improved when a structure that the user has designated on the photographed image IC is highlighted on the map screen.

Furthermore, an input method may be different depending on attributes of structures. That is, the input method is changed depending on the attributes of the structures. For example, when designating a road, an operation of tracing a portion of the road is performed, or when designating a building, an operation of holding down on a portion of the building is performed. Thus, it becomes possible to prevent the possibility that the user makes input errors.

Furthermore, the two images of the photographed image IC and the map image IM may be displayed on one screen, and while the user designates a structure included in either the photographed image IC or the map image IM, a corresponding structure included in the other image may be highlighted. That is, for example, while the user touches a structure included in the photographed image IC, a corresponding structure included in the map image IM is kept being highlighted, and when the user stops touching, the highlighting process is finished. Thus, a linkage between a display and an operation performed by the user is improved, thereby allowing the user to more easily understand the correspondence between each the designated structures included in the photographed image IC and a structure included in the map image IM, or the correspondence between each of the designated structures included in the map image IM and a structure included in the photographed image IC.

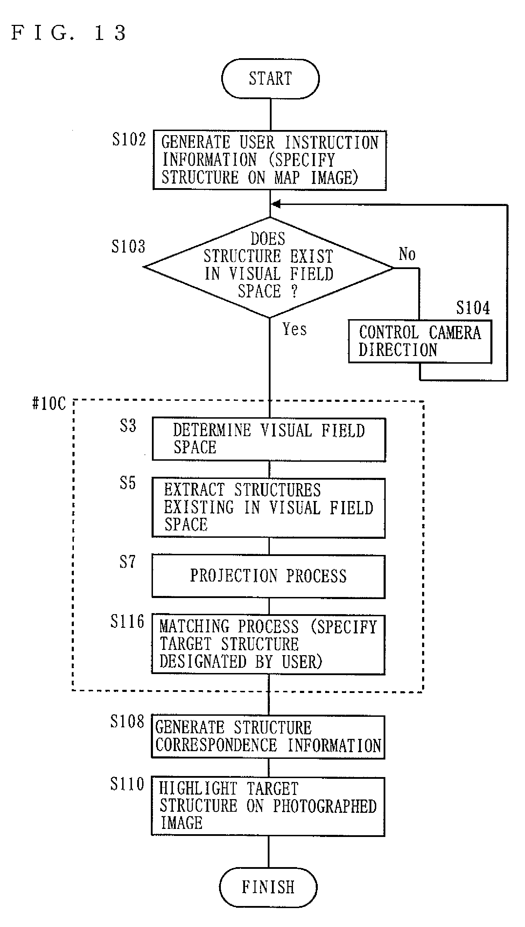

(fourth embodiment)
Next, referring to FIG. 13, the information display device according to the fourth embodiment will be described. In the present embodiment, an imaging direction and an imaging scale of the camera can be changed. Thus, when the user designates a structure on the map image IM and the designated structure does not exist in the visual field space of the photographed image IC, the imaging direction of the camera is changed, thereby making it possible to highlight a corresponding structure.

Referring to a flowchart shown in FIG. 13, the structure highlighting method according to the present embodiment will be described. The flowchart shown in FIG. 13 is different from that shown in FIG. 10 in that, in FIG. 13, steps S103 and S104 are additionally provided between step S102 and the third structure specifying routing #10C.

Specifically, when it is detected in step S102 that the user designates a structure on the map image IM, the structure correspondence acquisition section 5 determines in step S3 whether or not the structure that the user has designated on the three-dimensional map space exists in the visual field space of the photographed image IC.

When it is determined that the designated structure on the map image IM does not exist in the visual field space of the photographed image IC, the imaging direction of the camera is changed in step S104 such that the structure designated by the user is to exist within the visual field space. As a result, when the structure designated by the user comes within the visual field space, it is determined Yes in step S103, and the process proceeds to the third structure specifying routing #10C where the aforementioned process is executed, thereby causing a selected structure to be highlighted on the photographed image IC.

The camera imaging direction is changed in such a manner as described above, thereby allowing the user to recognize, among structures within a wider area, a correspondence between each of the designated structure included in the map image IM and a structure included in the photographed image IC. Note that above embodiment illustrates an example where the imaging direction of the camera is changed in accordance with an operation performed by the user designating a structure on the map. However, the user may change the imaging direction of the camera, thereby designating a structure existing in the visual field space of the camera. Furthermore, the imaging scale maybe changed instead of the imaging direction.

In the aforementioned examples, the image display section 7 displays both the photographed image IC and the map image IM on one display. However, the photographed image IC and the map image IM may be displayed on two displays, respectively. Furthermore, the photographed image IC and the map image IM may not be simultaneously displayed. In this case, for example, only the map image IM is firstly displayed on a display, and when the user designates a structure on the map image IM, the displayed image is switched from the map image IM to the photographed image IC, and a corresponding structure included in the photographed IC is highlighted. Alternatively, after the user designates a structure, a display method may be switched from a one-screen display to a two-screen display. The same is also true of the case where only the photographed image IC is firstly displayed so as to prompt the user to designate a structure included in the photographed image IC.

As described above, when the user designates a structure, either the photographed image IC or the map image IM is displayed. Therefore, the selected image can be displayed in a size larger than the case where the two images are displayed on one display. Thus, it becomes easier to designate a structure.

Furthermore, in the aforementioned examples, the camera is mounted on a vehicle. However, the present invention is not limited thereto. The camera may be mounted on a mobile unit such as a cellular phone, a ship or an airplane, or may be installed in a building or the like. Furthermore, the camera and the display may be placed apart from each other.

While the invention has been described in detail, the foregoing description is in all aspects illustrative and not restrictive. It is understood that numerous other modifications and variations can be devised without departing from the scope of the invention.

### INDUSTRIAL APPLICABILITY

An information display device according to the present invention can be used as an image display device or the like such as a car navigation device mounted on a vehicle, an on-vehicle information terminal, a display and the like. Also, the information display device according to the present invention is also applicable as a cellular phone carried by a pedestrian and a navigation device included in a mobile unit such as a ship, an airplane and the like.

## Claims

1. An information display device comprising:
photographed image acquisition means for acquiring a photographed image;
map information storage means for storing map information;
means for generating a map image based on the map information;
image display means for displaying the photographed image and the map image;
input means for designating, based on an operation performed by a user, at least one structure displayed in either the photographed image or the map image; and
structure correspondence acquisition means for acquiring a correspondence between the at least one structure displayed in the photographed image and at least one structure displayed in the map image, or acquiring a correspondence between the at least one structure displayed in the map image and at least one structure displayed in the photographed image, wherein
the image display means highlights, when the at least one structure displayed in the photographed image is designated, the at least one structure, among structures displayed in the map image, corresponding to the at least one structure having been designated, or highlights, when the at least one structure displayed in the map image is designated, the at least one structure, among structures displayed in the photographed image, corresponding to the at least one structure having been designated.

2. The information display device according to claim 1, wherein
the image display means simultaneously displays the photographed image and the map image.

3. The information display device according to claim 1, wherein
the image display means displays, when the at least one structure is designated by the input means, at least one of the photographed image and the map image, and further displays, when the at least one structure corresponding to the at least one structure having been designated is highlighted, the at least one of the photographed image and the map image which includes the at least one structure to be highlighted.

4. The information display device according to claim 1, wherein
the input means is a touch panel, and
the image display means highlights, when the at least one structure displayed in the photographed image is touched, the at least one structure, among the structures displayed in the map image, corresponding to the at least one structure having been touched, or highlights, when the at least one structure displayed in the map image is touched, the at least one structure, among the structures displayed in the photographed image, corresponding to the at least one structure having been touched.

5. The information display device according to claim 1, wherein
the photographed image acquisition means provides a camera for picking up the photographed image, and
the structure correspondence acquisition means acquires the correspondence between the at least one structure displayed in the photographed image and the at least one structure displayed in the map image, based on a camera position obtained at a time of picking up the photographed image and based on a camera attribute which is a parameter for determining an imaging direction and an imaging area.

6. The information display device according to claim 5, wherein
the camera attribute includes a camera angle, a focal length and an image size, all of which are obtained at the time of picking up the photographed image.

7. The information display device according to claim 1,
wherein
the image display means superimposes, on each of the photographed image and the map image, a supplementary display for indicating any of the structures which can be designated by the user.

8. The information display device according to claim 1, wherein
if the photographed image contains a structure in which at least a portion thereof is concealed by other structures, the image display means superimposes, on the photographed image, a supplementary display for indicating that the concealed structure exists in the photographed image.

9. The information display device according to claim 8, further comprising obstacle detection means for detecting an obstacle existing in a visual field space of the photographed image, wherein
if the photographed image contains a structure in which at least a portion thereof is concealed by an obstacle detected by the obstacle detection means, the image display means superimposes, on the photographed image, the supplementary display for indicating that the concealed structure exists in the photographed image.

10. The information display device, wherein
the image display means highlights, while the at least one structure displayed in the photographed image is designated, the at least one structure, among the structures displayed in the map image, corresponding to the at least one structure having been designated, or highlights, while the at least one structure displayed in the map image is designated, the at least one structure, among the structures displayed in the photographed image, corresponding to the at least one structure having been designated.

11. The information display device according to claim 1, wherein
the image display means changes a method of highlighting the at least one structure corresponding to the designated at least one structure, based on the order in which the at least one structure is designated or based on an attribute of the at least one structure.

12. The information display device according to claim 1, wherein
the image display means highlights both of the at least one structure designated in the photographed image and the at least one structure, displayed in the map image, corresponding to the at least one structure designated in the photographed image, or highlights both of the at least one structure designated in the map image and the at least one structure, displayed in the photographed image, corresponding to the at least one structure designated in the map image.

13. The information display device according to claim 12, wherein
the image display means highlights the at least one structure designated in the photographed image and the at least one structure, displayed in the map image, corresponding to the at least one structure designated in the photographed image, so as to be associated with each other, or highlights the at least one structure designated in the map image and the at least one structure, displayed in the photographed image, corresponding to the at least one structure designated in the map image, so as to be associated with each other.

14. The information display device according to claim 1, wherein
the image display means sets a map display area such that structures existing in a visual field space of the photographed image are displayed in the map image.

15. The information display device according to claim 1, wherein
a designation method used by the input means is different depending on an attribute of the designated at least one structure.

16. The information display device according to claim 5, wherein
the photographed image acquisition means can change at least one of the imaging direction and an imaging scale of the photographed image.

17. The information display device according to claim 16, wherein
the photographed image acquisition means changes at least one of the imaging direction and the imaging scale, when the at least one structure designated in the map image does not exist in a visual field space of the photographed image.

## Amended claims

### Amended claims under Art. 19.1 PCT

**6.** The information display device according to claim 5, wherein
the camera attribute includes a camera angle, a focal length and an image size, all of which are obtained at the time of picking up the photographed image.

**7.** The information display device according to claim 1, wherein
the image display means superimposes, on each of the photographed image and the map image, a supplementary display for indicating any of the structures which can be designated by the user.

**8.** The information display device according to claim 1, wherein
if the photographed image contains a structure in which at least a portion thereof is concealed by other structures, the image display means superimposes, on the photographed image, a supplementary display for indicating that the concealed structure exists in the photographed image.

**9.** The information display device according to claim 8, further comprising obstacle detection means for detecting an obstacle existing in a visual field space of the photographed image, wherein
if the photographed image contains a structure in which at least a portion thereof is concealed by an obstacle detected by the obstacle detection means, the image display means superimposes, on the photographed image, the supplementary display for indicating that the concealed structure exists in the photographed image.

**10.** (amended) The information display device according to claim 1, wherein
the image display means highlights, while the at least one structure displayed in the photographed image is designated, the at least one structure, among the structures displayed in the map image, corresponding to the at least one structure having been designated, or highlights, while the at least one structure displayed in the map image is designated, the at least one structure, among the structures displayed in the photographed image, corresponding to the at least one structure having been designated.

**11.** The information display device according to claim 1, wherein
the image display means changes a method of highlighting the at least one structure corresponding to the designated at least one structure, based on the order in which the at least one structure is designated or based on an attribute of the at least one structure.

**12.** The information display device according to claim 1, wherein
the image display means highlights both of the at least one structure designated in the photographed image and the at least one structure, displayed in the map image, corresponding to the at least one structure designated in the photographed image, or highlights both of the at least one structure designated in the map image and the at least one structure, displayed in the photographed image, corresponding to the at least one structure designated in the map image.

**13.** The information display device according to claim 12, wherein
the image display means highlights the at least one structure designated in the photographed image and the at least one structure, displayed in the map image, corresponding to the at least one structure designated in the photographed image, so as to be associated with each other,
